# EUROPEAN PATENT SPECIFICATION

(11) **EP 2 583 613 B1**
(45) Date of publication and mention of the grant of the patent: **01.10.2014**
(21) Application number: 12187281.6
(22) Date of filing: 04.10.2012
(51) Int. Cl.: A47L 15/42, A47L 15/48

(54) **Dishwasher**
Geschirrspülmaschine
Lave-vaisselle

(30) Priority: 19.10.2011 IT TO20110943
(43) Date of publication of application: 24.04.2013
(73) Proprietor: Indesit Company S.p.A., 60044 Fabriano (AN) (IT)
(72) Inventor: Benedetto, Gianluca, 07024 La Maddalena (OT) (IT); Barus, Silvia, 10122 Torino (IT); Ten Bok, Marco Whilhelmus Gerhardus, 10064 Pinerolo (TO) (IT); Lippera, Mario, 60043 Cerreto d'Esi (AN) (IT); Ghezzi, Gloria, 00142 Roma (IT); Brugnera, Maria Chiara, 30174 Mestre (VE) (IT)
(74) Representative: Santonicola, Paolo

(56) References cited:
- EP-A1- 0 536 621
- EP-A1- 1 447 042
- EP-A1- 2 327 349
- EP-A2- 2 241 242
- WO-A2-2005/063110
- DE-A1- 19 806 700

## Description

### TEXT OF THE DESCRIPTION

### Field of the invention

The present invention relates to a dishwashing machine having a structure that comprises a base and a wash tub supported by the base, in which the base defines a space for housing operating components of the machine and in which the tub has a lower wall, an upper wall, and side walls.

### Prior art

Modem-day dishwashing machines are increasingly conceived for guaranteeing a high quality of the process of treatment of the dishes and an efficient exploitation of the energy and water sources. In this connection, dishwashing machines are provided with auxiliary functional systems, in addition to their main hydraulic system provided to carry out washing in the strict sense.

A typical example of auxiliary system used on some machines is represented by a system of ventilation or forced drying of the dishes, which generally includes a condensation device external to the tub, set up against a stationary wall thereof, or else positioned inside the door of the machine. In these machines, the overall quality of the treatment is enhanced in so far as, at the end of an operating cycle of the machine, the dishes are practically completely dry and ready for a new use or for being put away.

Another example of auxiliary system is represented by a liquid-storage system, based upon the use of a tank, which is also generally set up against a wall of the wash tub, on the outside thereof. In some machines the storage tank is provided in the perspective of re-using, in a subsequent operating cycle, part of the liquid used in a previous cycle (typically, the liquid used in the last rinse of the dishes), or else to obtain, within a step of a washing cycle, a partial heating of water to be used in a subsequent step of the same cycle, exploiting the heat exchange that - following upon steps of hot treatment - is obtained between a wall of the tub and the tank set up against it.

EP1447042 discloses a dishwasher that has a wash chamber with openings by which humid air is drawn out by a fan and cooled before being returned to the chamber. The fan comprises two stages, a first stage for drawing out the humid air and for returning it to the wash chamber, and a second stage for drawing fresh air from outside the chamber and for using it for cooling the humid air drawn out from the wash chamber, therefore condensing the water vapour contained in such humid air.

EP2327349 discloses a method that Involves opening a valve mounted on a water circulation pipe connecting a water circulation pump, i.e. centrifugal pump, to a water storage reservoir of a dish washing machine. Cleaning liquid, i.e. water, is circulated through the pipe from the storage reservoir by the pump. The liquid is returned to a washing tank by overflowing through an opening provided in fluid communication with the tank. The liquid is discharged from the storage reservoir towards the tank by gravity by the valve in open position and through the pump at stop position.

The production of dishwashing machines equipped with auxiliary functional systems of the type referred to above implies operations of assembly on the structure of the machine of components - such as the condensation device or the tank - that differ according to whether the machine to be produced is equipped with a condensation drying system or a liquid-storage system. Very frequently, moreover, the type of the auxiliary functional system of the machine, whether it be provided for drying or for storing liquid, requires production and assembly of components of the structure of the machine that differ from one another.

### Object and summary of the invention

The present invention basically proposes providing a dishwashing machine having a basic structure devised in a simple and economically advantageous way, such as to enable a convenient and precise assembly of a component of an auxiliary functional system external to the wash tub, such as a condensation device or a storage tank. A further object of the invention is to provide such a dishwashing machine, the basic structure of which may be the same irrespective of whether a condensation device or a storage tank is to be associated thereto in the production stage.

One or more of these objects is achieved, according to the present invention, by a dishwashing machine having the characteristics referred to in Claim 1. Preferred characteristics of the invention are specified in the dependent claims. The claims form an integral part of the technical teaching provided in relation to the invention.

### Brief description of the drawings

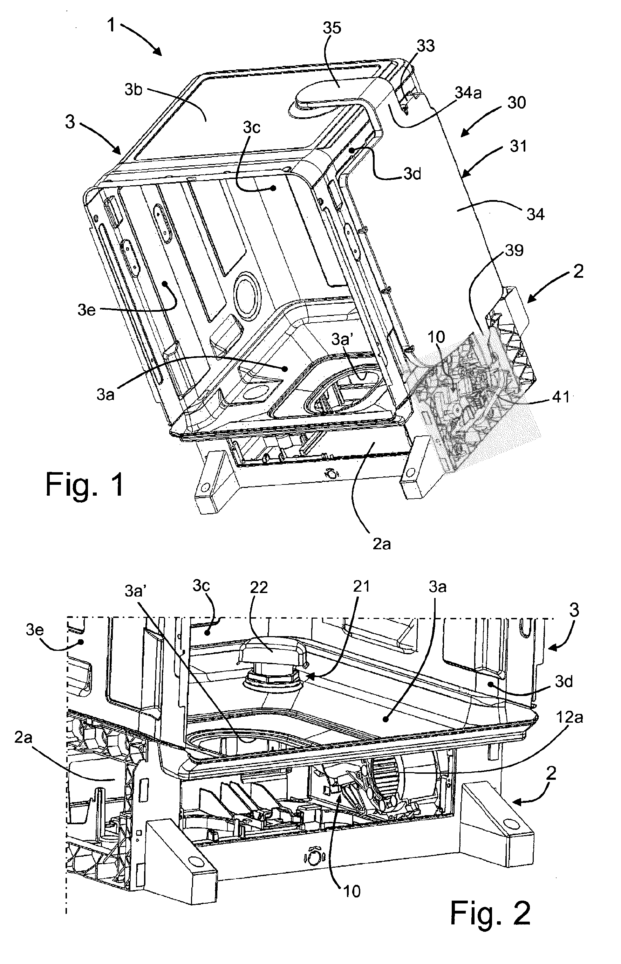

Further purposes, characteristics, and advantages of the invention will emerge clearly from the ensuing detailed description of an embodiment provided purely by way of explanatory and non-limiting example, with reference to the annexed drawings, wherein the embodiment corresponding to figures 1-4 does not form part of the claimed invention, but represents background art that is useful for understanding the invention:
Figure 1 is a partial and schematic perspective view of a dishwashing machine which is not according to the invention, in an embodiment;
   - Figure 2 is a partial and schematic perspective view of a lower portion of the machine of Figure 1;
   - Figure 3 is a partial and schematic perspective view of some parts of the machine of Figures 1 and 2;
   - Figure 4 is a schematic perspective view of a condensation device used in the machine of Figures 1-3;
   - Figure 5 is a partial and schematic perspective view of a dishwashing machine according to the invention, in an embodiment of the invention;
   - Figure 6 is a partial and schematic perspective view of a lower portion of the machine of Figure 5;
   - Figure 7 is a schematic perspective view of a device for storing liquid used in the machine of Figures 5-6;
   - Figure 8 is a schematic perspective view of a hydraulic deviator device used in the machine of Figures 5-6;
   - Figure 9 is a schematic perspective view of a valve device used in the machine of Figures 5-6;
   - Figure 10 is a partial and schematic perspective view of an upper portion of the wash tub of a machine according to the invention;
   - Figure 11 is a detail of the device of Figure 4 or of the device of Figure 7;
   - Figures 12 and 13 are two perspective views, from different angles, of a fixing member used in the machine according to the invention;
   - Figure 14 is a partial and schematic perspective view of an upper portion of the machine according to the invention, including the parts illustrated in Figures 10-13; and
   - Figure 15 is a detail of a system for the lower coupling of the devices of Figures 4 or 7 to a base of the machine according to the invention.

### Description of preferred embodiments of the invention

Reference to "*an embodiment*" or "*one embodiment,"* within the framework of the present description is intended to indicate that a particular configuration, structure, or characteristic described in relation to the embodiment is comprised in at least one embodiment. Hence, phrases such as "*in an embodiment*" or "*in one embodiment*" and the like that may be present in various points within the framework of the present description do not necessarily all refer to one and the same embodiment. Moreover, the particular configurations, structures, or characteristics may be combined in any adequate way in one or more embodiments. The references used in what follows are merely provided for convenience and do not define the sphere of protection or the scope of the embodiments.

It should moreover be pointed out that in the sequel of the present description only the elements useful for an understanding of the invention will be described, taking for granted, for example, that the machine according to the invention comprises all the elements in themselves known for operation of a dishwashing machine, including an external cabinet thereof, a user interface, a control system, pumps, level sensors, resistors, a sprinkler system for sprinkling the dishes, etc.

Represented schematically in Figure 1 is a dishwashing machine 1 that does not form part of the present invention, provided with an auxiliary functional system. The machine 1 is illustrated limitedly to the parts of immediate interest for understanding the present invention.

The machine 1 has a structure that comprises a base 2 and a wash tub 3, supported by the base 2. The base 2, made, for example, of injection-moulded thermoplastic material, preferably has open side walls and defines a housing space 2a, positioned within which are various functional components of the machine 1, amongst which, for example, a washing pump, a discharge pump, a pressure switch, a sump for collecting the washing liquid, etc., which are here not represented for reasons of greater clarity of the drawings.

The wash tub 3 is of a conception as a whole known, apart from the specific characteristics envisaged according to the invention linked to the arrangement of a functional device external to the tub itself: as will emerge more clearly hereinafter, said device can, be a condensation device, forming part of a system for drying the dishes, or, according to the configuration of the machine of the invention else a tank for storing liquid.

The tub 3 comprises a lower wall 3a a upper wall 3b and four side walls. Visible in the figures are only the stationary side walls of the tub 3, i.e., the rear wall 3c, and the right-hand and left-hand walls, designated by 3d and 3e. The fourth side wall of the tub 3, i.e., its front wall, is constituted by an internal shell of the door of the machine, here not represented (the so-called "counter-door"). Also from Figure 2 it may be seen how the lower wall 3a of the tub defines a central opening 3a', mounted at which is the already mentioned collection sump (not represented) integrating the filtering system of the machine.

In the case of the embodiment of Figures 1 and 2, the auxiliary functional system of the machine 1 is a system for drying the dishes, which basically includes an assembly for blowing drying air, designated as a whole by 10, and a condensation device or condenser, designated as a whole by 30. As may be clearly seen, the assembly 10 is substantially installed within the space 2a for housing the base 2, whereas the condenser 30 substantially extends on the outside of the tub 3.

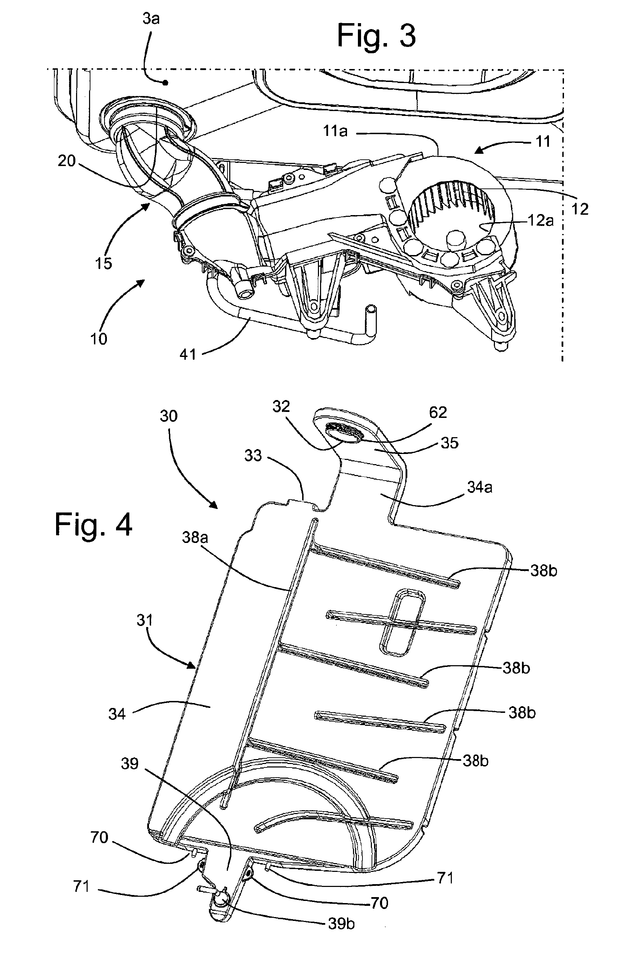

The assembly 10 can be obtained in any way known to the person skilled in the branch. Merely by way of indication, and with reference to the example illustrated in Figure 3, within the assembly 10 there may be identified a fan 11, preferably of a centrifugal type, which has a respective volute or casing 11a, housed in which is an impeller 12, driven by a corresponding electric motor. The casing 11a has a suction mouth 12a, preferably substantially coaxial to the axis of rotation of the impeller 12, and a delivery, which is in fluid communication with a delivery pipe 15, provided for introducing drying air into the tub 3. The assembly 10 preferably integrates also means for heating the drying air, which can be integrated along the pipe 15 or in the delivery of the fan 11; also the heating means may be of any known type and comprise, for example, an electrical element or a radiator integrating a plurality of resistors of a PTC type, or again a serigraphed resistor.

In the example illustrated, the inlet for the drying air into the tub is defined at the lower wall 3a. As may be seen from Figures 2 and 3, said inlet includes a passage 20 of the wall 3a (Figure 3), defined in the proximity of the lower right corner of the tub, and a tubular chimney 21, which extends through said passage, with interposition of sealing means and fixing means, of a structure in itself known. The chimney 21 has an upper end and a lower end, which open on opposite sides of the wall 3a, the upper end being at a greater height than the level reached by the water in the course of operations of washing or rinsing performed by the machine 1. Associated to the upper end of the chimney 21 is a cap or lid 22, of a conception in itself known, which defines a substantially shielded or labyrinthine path, whereas coupled to the lower end is the outlet end of the delivery pipe 15, the inlet end of which - as has been said - is in fluid communication with the delivery of the fan 11.

In the embodiment exemplified in the figures, the casing 11a of the fan 11 is mounted with the axis of rotation of the corresponding impeller 12 - and hence with the suction mouth 12a substantially sharing said axis - that is generally oriented horizontally, or in any case transverse to the height of the machine. In the example, the mouth 12a faces the inside of the base 2, where functional components (such as the pumps and the sump) that can yield heat to the air taken in are normally installed.

It is to be noted that, according to variant embodiments (not illustrated), the inlet for the drying air into the tub may be provided also in one of the side walls of the tub 3, such as, for example, the rear wall 3c or the side wall 3e, with a different arrangement and conformation of the assembly 10, and hence of the pipe 15. In this case, the opening present in the wall 3c or 3e, at which the outlet end of the pipe 15 is located, will be provided with a shielding lid, in itself known, along the chimney 21.

The condenser 30, illustrated as a whole in Figure 4, basically consists of a hollow body 31 made of plastic material, of a generally flattened configuration and preferably made of a single piece. The body 31 has an upper opening 32 that - as will be seen - functions as inlet for the damp air, for positioning at a corresponding opening of the tub 3, and a second opening 33, which - as will be seen - functions as outlet for the dehumidified air, in fluid communication with the environment external to the tub 3. As may be appreciated also from Figure 1, the body of the condenser 31 has a first vertical portion 34, which - in the installed condition - extends axially in the direction of the height of the tub 3 and generally faces and is parallel to a side wall of the latter, in particular the right-hand stationary wall 3d. Advantageously, defined within the vertical portion 34 of the condenser is a condensation path for the damp air leaving the tub 3.

The body 31 of the condenser 30 then includes a second generally horizontal portion, designated by 35, which has dimensions and section of passage decidedly smaller than those the portion 34 and substantially extends perpendicular to the latter. As may be clearly seen also in Figure 1, the horizontal portion 35 of the body of the condenser 31 is generally set facing and parallel to the upper wall 3b of the tub 3. As will be seen, the portion 35 of the hollow body 31 of the condenser 30 is intended for connecting the tub 3 to the upper region of the portion 34. The opening 32 is for this purpose defined in the horizontal portion 35 of the body 30, and in particular in its face facing the upper wall 3b of the tub 3.

In the example of embodiment illustrated, the opening 33 of the condenser 30, for outlet of the dehumidified air, is located in the upper region of the vertical portion 34, in a position generally set alongside the stretch 34a connecting the portion 34 itself and the horizontal portion 35, i.e., at the inlet of the damp air into the condensation path. As may be appreciated, the condensation path then includes a descending stretch, which substantially extends from the radiusing stretch 34a as far as towards the lower region of the vertical portion 34, and an ascending stretch, which substantially extends from said lower region up to the area in which the opening 33 of the body 31 is located. In this connection, defined in the body 31 of the condenser 30 is at least one intermediate longitudinal wall 38a, which substantially extends from the lower region of the portion 34 almost up to its upper end, in the proximity of the outlet opening 33. As may be appreciated in particular from Figure 4, moreover, at the descending stretch of the condensation path, the body of the condenser 31 has a substantially labyrinthine conformation; for this purpose, transverse walls 38b are provided, with a substantially combfingered arrangement, some of which departing from the longitudinal wall 38a.

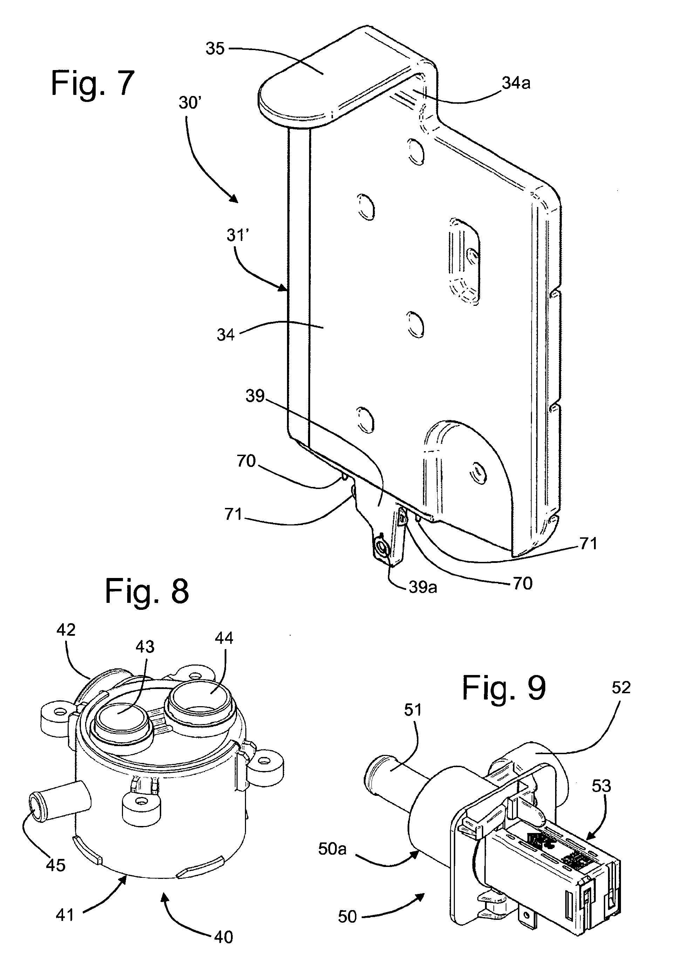

In the embodiment shown, the walls 38a and 38b are obtained of a single piece in the body of the condenser, substantially in the form of grooves projecting towards the inside of the body itself. A hollow body of this sort, of a generally flattened configuration in a single piece, may, for example, be advantageously obtained by blow-moulding of thermoplastic material. Preferably, defined at the lower end of the vertical portion 34 of the body of the condenser 31, in a position substantially close to the end of the descending stretch 36 of the condensation path, is a restricted terminal portion, which functions as receptacle for collection of the water resulting from condensation of the damp air. The aforesaid terminal portion is designated by 39 in the figures and has an opening - not visible, but similar to the one designated by 39a in Figure 7 - in the part thereof facing the tub 3 or the base 2, provided in a position corresponding to which is a respective draining connector, designated by 39b. Preferably, connected to said connector 39b is a small tube, designated by 41 in Figures 1 and 3, which gives out into a tray - not represented - that is normally present in the lower part of the base 2. The amount of water that is discharged by the condenser 30 tends to be very modest so that said water can evaporate naturally from the tub in a short period, without any accumulation prolonged in time. In a possible embodiment, in any case, within the aforesaid tray there may be installed sensor means of a type in itself known, which, upon detection of a level of water deemed potentially dangerous, issue a warning for the user of the machine 1 and/or interrupt operation of the machine itself.

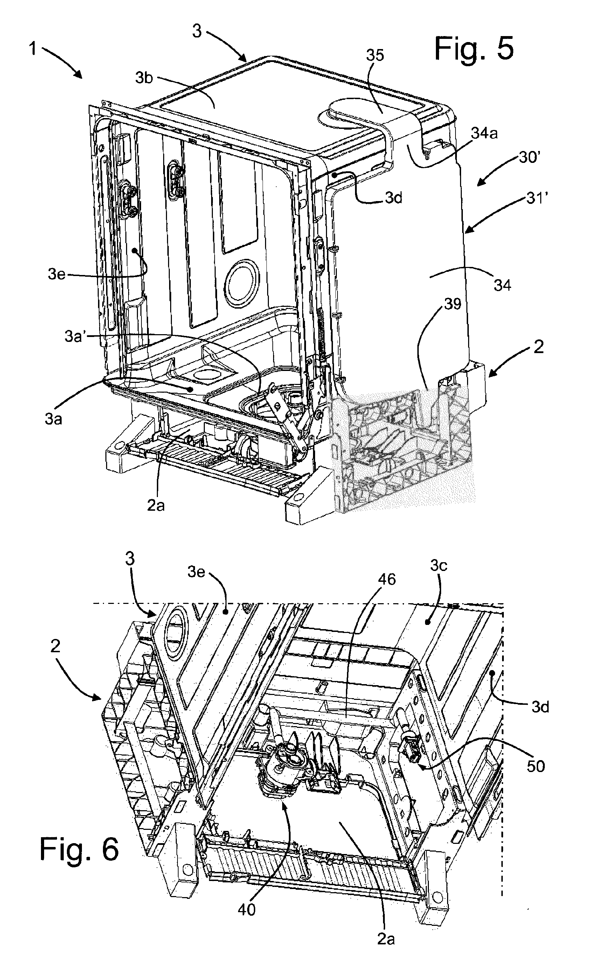

In the case of the embodiment of Figures 5 and 6, the auxiliary functional system that equips the machine 1 is - instead of a system for drying the dishes - a liquid-storage system, which basically includes a filling/emptying arrangement and a tank, designated by 30'. As may be appreciated also from the comparison between Figures 1 and 5, the position of installation of the tank 30' is substantially similar to that of the condenser 30 of the first embodiment, and the former has an external configuration very similar to that of the latter, in terms of shape and outer dimensions.

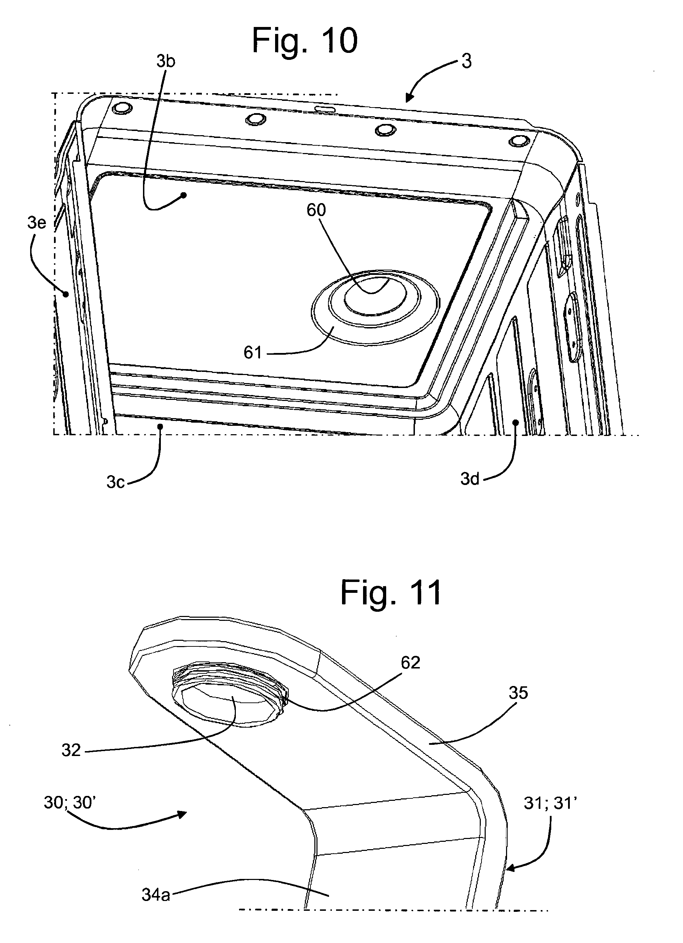

Consequently, with reference to Figure 7, also the tank 30' comprises a corresponding hollow body 31 made of plastic material, which may also be obtained, for example, by blow moulding, in which there may be identified a vertical portion 34, a horizontal portion 35, and a corresponding radiusing portion 34a, as well as a lower terminal portion 39. Also in this case, provided at the horizontal portion 35 is an upper opening 32 (see Figure 11), whereas a lower opening 39a is provided at the terminal portion 39.

Unlike the body 31 of the condenser 30, the body 31' of the tank 30' does not require the opening 33. It should, however, be noted that, in a possible variant, the same body 31 of the condensation device 30 of the first embodiment can be advantageously used as storage tank in the second embodiment, in which case the opening 33 will be preferably sealed. In any case, given their substantially similar configuration, the equipment used for moulding the bodies 31 and 31' can be to a large extent the same, with the difference that for moulding of the body 31' there are not strictly necessary either the opening 33 or the walls 38a, 38b of Figure 4.

The arrangement for filling and emptying the tank 30' used in the machine of Figures 5 and 6 may be of any conception known in the sector. In the case exemplified, said arrangement in part exploits the valve means used on the machine for supplying selectively the two customary sprinkler members - not represented - in order to carry out treatment programs on a reduced load or to carry out alternating washing and rinsing steps (i.e., ones carried out by supplying just one or both of the sprinklers, or else by supplying alternatively one or the other of the sprinklers).

In a preferred embodiment, the aforesaid valve means comprise a device for alternating supply of the sprinklers, designated by 40 in Figure 6 (in said figure, for reasons of greater clarity, the lower wall of the tub and other components normally present in the housing space 2a, such as sump, washing pump, discharge pump, etc., are not represented). The device 40, like the similar devices according to the known art, has a casing 41 provided with an inlet 42, for connection to the delivery of a known washing pump, and two main outlets 43 and 44, connected, respectively, to the supply of the lower sprinkler and of the upper sprinkler, the outlet 43 preferably having a smaller section of passage than the outlet 44. Mounted mobile inside the casing 41 is an open/close member or distributor, which can be actuated by a corresponding external actuator for assuming at least one first position, of opening of both of the outlets 43 and 44, and at least one second position, of opening of the outlet 44 and of closing of the outlet 43 and/or vice versa, all according to the known art.

In a particular embodiment of the invention, such as the one represented, the device 40 is adapted in such a way that the casing 41 additionally defines a further outlet, designated by 45, which is always in fluid communication with the inlet 42, irrespective of the operating position of the aforesaid open/close member. Connected to said outlet 45 is the first end of a pipe, designated by 46 in Figure 6, the second end of which is connected to the lower opening 39a of the tank 30', with interposition of a valve, designated by 50, of any known conception.

In the embodiment exemplified, the valve 50, represented in Figure 9, includes a connector body 50a having an inlet 51, connected to which is the pipe 46, and an outlet 52, connected, with interposition of suitable sealing means, to the opening 39a of the tank 30'. Operative between the inlet 51 and the outlet 52, within the body 50a, is an open/close element, which can be actuated by means of an actuator, here represented by an electrothermic actuator 53, in itself known. The valve 50 is of a normally closed type: consequently, in the absence of supply to the actuator 53, the pipe 46 is not in fluid communication with the inside of the tank 30'.

According to an advantageous characteristic, irrespective of whether the machine 1 is equipped with the drying system of the first embodiment or else with the storing system of the second embodiment, the basic structure of the machine 1 is the same.

In this connection, defined in the upper wall 3b of the tub 3 is a through hole, designated by 60 in Figure 10, which is preferably circular and formed in an area 61 of the same wall 3b that is slightly drawn outwards. On the other side, as may be seen from Figure 11, the upper opening 32 of the condenser 30 or of the tank 30' is defined by a projecting attachment, defined in the face of the body portion 35 that is to face the upper wall 3b of the tub 3. In the example, said attachment basically consists of a cylindrical stretch 62, which is to be fitted in the hole 60, with possible interposition of sealing means. Coupled then to the part of the cylindrical stretch 62 that projects within the tub 3 is a fixing member; for this purpose, in the preferred embodiment, the cylindrical stretch 62 is threaded.

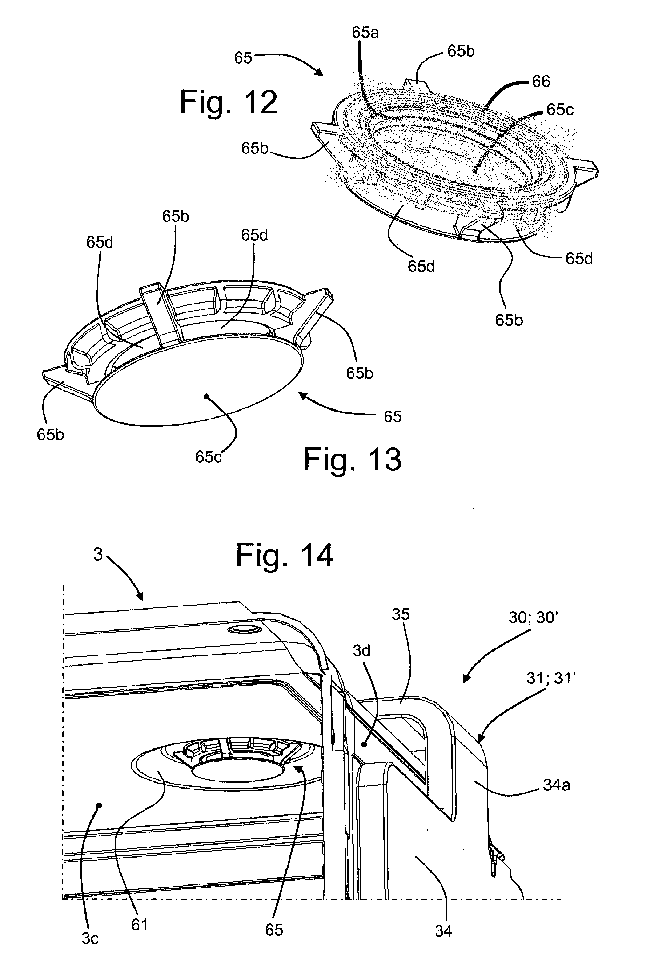

Represented in Figures 12 and 13 with different views is a possible embodiment of the aforesaid fixing member, designated as a whole by 65, which advantageously functions also as shielding for the opening 32. In the example, the member 65 is basically configured like a plug, having a body made of a single piece of moulded thermoplastic material. The body of the member 65 has a ringnut part provided with internal screw 65a, connected to which, via upright portions 65b, is a front wall 65c: in this way, radial passages 65d are defined between the aforesaid ringnut part and the front wall 65c. In its annular ringnut portion, the body of the member 65 advantageously defines a seat for an annular gasket 66. As may be appreciated, then, for the purposes of upper fixing of the hollow body - whether the hollow body 31 of the condensation device 30 or the hollow body 31' of the storage tank 30' - the cylindrical stretch 62 is fitted in the through hole 60 of the upper wall 3b of the tub 3, and fastened on the part thereof projecting into the tub is the member 65. The assembled condition may be clearly seen in Figure 14: it will be appreciated that, thanks to the drawn area 61, the member 65 does not constitute a significant encumbrance towards the inside of the tub 3.

In one embodiment, the bodies 31 and 31' of the condenser 30 and of the tank 30' advantageously integrate also coupling means used for establishing positioning and fixing of the bodies themselves to the base 2 of the machine 1. As may be noted in particular in Figures 4 and 7, integrated in the restricted terminal portion 39 of the body 31 or 31' are two lateral flanges 70, provided with respective holes. From the same figures it may moreover be noted how, from the lower edge of the vertical portion 34, in a lateral position with respect to the terminal portion 39, there depart downwards two substantially vertical projections or pins 71, which are also made integrally in the body 31 or 31' and which preferably have a cylindrical or slightly frustoconical section. Both the lateral flanges 70 and the pins 71 can be easily made of a single piece with the body 31 or 31' in the course of the corresponding moulding operation.

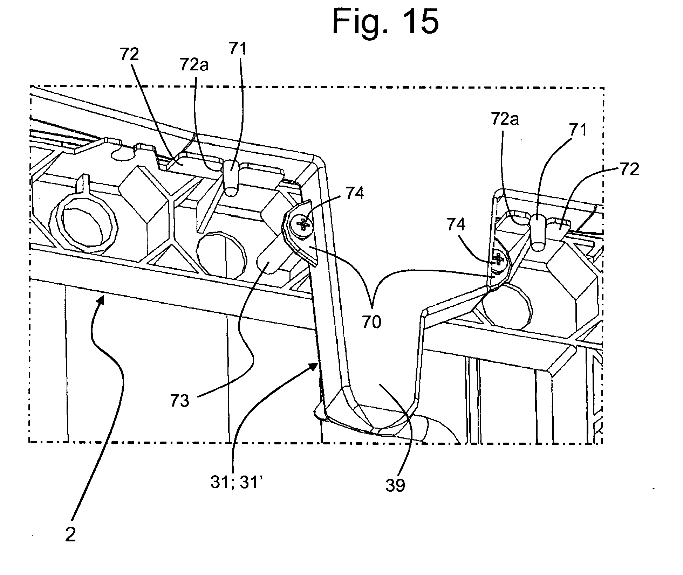

On the other hand, the base 2 has coupling means designed to co-operate with the ones defined in the lower part of the body of the condensation device 30 or of the tank 30'. In this connection, in the embodiment exemplified in Figure 15, the base 2 has, in its side corresponding to the wall 3d of the tub 3, and preferably at its upper edge, two cantilevered walls 72, defined between which is a positioning space for the terminal portion 39 of the body 31 or 31'. Defined in each cantilever wall is a respective seat 72a, for insertion of a corresponding pin 71. In the body of the base 2, in a position lower than the cantilever walls 72 formations are then defined - one on the visible side, designated by 73 - provided with a respective hole, designed to receive a corresponding fixing screw 74, inserted passing in the opening of a corresponding lateral flange 70. Also the cantilevered walls 72, with the corresponding seats 72a, and the formations 73, with the corresponding holes, are advantageously formed integrally in the base 2, in the course of moulding thereof. The screws 74 are preferably of a self-tapping type.

As may be appreciated, the coupling between the upper hole 60 of the tub 3 and the cylindrical attachment 62 (Figures 10 and 11) and the coupling between the pins 71 and the corresponding seats 72a of the base 2 (Figure 15) facilitates assembly and precise positioning of the body 31 or 31' on the structure represented by the base 2 and by the tub 3, in particular guaranteeing the correct position between the vertical part 34 of the body 31 or 31' and the side wall 3d of the tub 3. The presence of the cantilever walls 72 enables discharge thereon of the weight of the condenser 30 or of the tank 30', this being particularly useful in the second case, given that the tank is to be filled with water.

The modalities of operation of the machine 1 according to the two embodiments illustrated are regardless of the purposes of the present invention. In general terms, the machine 1 is equipped with a control system of its own with corresponding user interface, of a substantially known conception, which enables selection, start-up, and control of a plurality of washing programs. At least one of said programs is configured for managing operation of the drying system, in the case of the first embodiment, and of the liquid-storage system, in the case of the second embodiment.

For example, in the case of the embodiment of Figures 1-4, after the discharge phase in the course of the last step of the program that envisages the use of liquid (typically the last rinse), the control system issues a command for start-up of the fan 11 of the assembly 10 and supply of the heating means. The air sucked in via the mouth 12a of the fan is then forced into the pipe 15 for delivery of the drying air. At outlet from the pipe 15 the heated air passes into the chimney 21 and, through the lid 22, diffuses into the tub 3 from beneath, impinging upon the dishes contained in the baskets inside the tub (not represented). Pre-heating of the air, when envisaged, is aimed at favouring and speeding up the process of drying the dishes. The hot air tends to rise from below upwards, thus favouring also off-flow of the damp air towards the upper outlet (i.e., through the passages 65d of the member 65 mounted at the upper opening 32 of the condensation device 30), said damp air tending in any case already by itself to displace naturally into the upper part of the tub 3. The damp air then penetrates into the horizontal portion 35 of the condenser 31, and then arrives in the vertical portion 34. The air then traverses the descending stretch of the condensation path, yielding humidity, and then rises along the ascending stretch and comes out substantially dehumidified into the external environment, via the opening 33 of Figure 4. The condensation water is collected in the terminal portion 39, from where it is evacuated via the pipe 41.

In the course of the washing steps envisaged by an operating program of the machine 1, the presence of the chimney 21 with the corresponding lid 22 prevents the passage of water towards the inside of the pipe 15. As has been said, however, the opening through which the drying air is introduced into the tub could also be located in one of the side walls of the machine, in a higher position with respect to the maximum level that can be reached by the liquid in the tub.

In the case of the embodiment of Figures 5-9, for example, prior to the step of discharge of the liquid used for the last rinse, the control system of the machine governs opening of the valve 50 and start-up of the washing pump. The pump forces the rinsing liquid into the inlet 42 of the device 40 (Figures 6 and 8), and part of said liquid, in addition to being fed to one or both of the sprinklers, via the outlets 43 and/or 44 (preferably, to the upper sprinkler alone, the supply pipe of which has higher head losses), is free to flow into the outlet 45, and hence into the tank 30', through the pipe 46. The tank 30' is in this way progressively filled from beneath. The filling step may, for example, be timed. Given that the capacity of the washing pump, the section of the various passages (the device 40, the pipe 46, and the valve 50), and the times of opening/closing of the valve 50 are known, the step of filling of the tank can in fact last a pre-set time in order to obtain a certain level of filling of the tank, which is substantially predetermined. It is to be noted that, advantageously, the horizontal portion 35 of the tank, with the attachment 62, the corresponding opening 32, and the member 65 functions in this case also as vent and/or overflow system for the tank (in other words, in the course of filling and emptying of the tank 30, the air is free to exit from and enter, respectively, the tank 30 and, even in the case where the liquid introduced into the tank 30 were for any reason to reach the horizontal portion 35, the liquid in excess can drop back into the tub from above, through the passages 65d of the member 65).

After the programmed time for filling the tank, the control system interrupts supply of the actuator 53 of the valve 50, which hence re-closes, and then starts the discharge pump, for evacuating from the machine the possible residue of rinsing liquid still present in the tub.

At start of a subsequent washing program, the control system issues a command for a new opening of the valve 50, in the absence of supply of the washing pump and charging of water from the external water mains supply. In this way, the liquid present in the tank 30' can flow away by gravity - via the pipe 46 - as far as the device 40 first, and then the pump, and then the sump of the tub 3, connected to which is the intake branch of the washing pump. Basically, then, in the emptying step, the liquid flows away into the tub from the tank 30' following a path that is opposite to the one followed during the filling step. The liquid thus introduced into the tub can be used, in the example considered and after re-closing of the valve 50, for executing a first step of washing the dishes. The liquid discharged from the tank is substantially at room temperature, and this enables, in addition to recovery of liquid, also a certain energy saving for heating thereof (in particular when the mains water has a temperature lower than room temperature). After carrying out the aforesaid first washing step, the liquid is then discharged from the tub via the customary discharge pump.

The volume of liquid charged into the tank 30' may be less than, greater than, or equal to the volume necessary for carrying out a washing step. Hence, in the first case, the control system will issue a command for an additional step of charging water from the mains supply up to the level necessary, for example detected with an appropriate sensor (such as a pressure switch). In the second case, the valve 50 will be opened for a time such as to ensure a partial discharge of the tank 30', i.e., discharge of a volume of liquid substantially corresponding to the amount necessary to carry out the washing step. In the third case, the time of opening of the valve 50 will be such as to enable complete emptying of the tank 30'. It may be taken for granted that, in the second case referred to, the control of the valve 50, for partial emptying of the tank 30', may also be obtained by exploiting a known level sensor present in the tub, such as a pressure switch (basically, when the sensor detects that a level of liquid necessary to carry out the washing step has been reached, the control system issues a command for closing of the valve 50, which may even be of a solenoid type). It is likewise clear that - in more sophisticated embodiments - the process of filling/emptying of the tank could be controlled by providing a corresponding sensor (for example, a turbine flowmeter) between the device 40 and the valve 50, or between the valve 50 and the lower opening 39a of the tank 30'.

The machine 1 according to the invention may be of the stand-alone type, in which case it will be provided with a cabinet that encloses the tub, with the generally flattened hollow body of the tank 30' that, without any problem, can be housed even in the narrow gap normally existing between the external cabinet and the side and upper walls of the tub of a dishwasher. Obviously, the machine 1 may also be of the built-in type, and hence without a cabinet that encloses the tub 3 completely.

From the foregoing description, the characteristics and advantages of the present invention emerge clearly. The structure of machine according to the invention is simple and inexpensive to produce, and its essential components, represented by the base 2 and by the tub 3 may always be the same, irrespective of whether the auxiliary functional system that equips the dishwasher to be produced is a drying system or else a liquid-storage system, with evident advantages in terms of standardization of production. Also the production of the condenser 30 and of the tank 30' can be performed for the most part using the same moulding equipment.

The assembly of the component of the auxiliary system that is external to the tub - whether this be the condenser 30 or the tank 30' - can be obtained with simple and elementary operations and enables a very compact configuration to be obtained. In the preferred embodiment, the correct positioning of the parts is ensured by the presence of the two positioning/constraint areas (in the upper part, at the roof of the tub, and in the lower part, at the base).

The hole 60 provided in the upper wall 3b of the tub, in combination with the upper opening 32 of the body 31 or 31' enables benefits in both of the configurations of the machine. In the case of a drying system, there is thus obtained an upper outlet for the damp air, which facilitates evacuation of the steam, which tends naturally to rise and to accumulate against the upper wall 3b. In the case of the storage system, said means provide a vent and/or a safety overflow for the tank 30'.

It is clear that numerous variations may be made by the person skilled in the branch to the dishwashing machine described by way of example, without thereby departing from the scope of the invention as defined in the annexed claims.

In the case exemplified of the embodiment of Figures 5-9, reference has been made to a device 40 with an outlet 45 always open and controlled by means of the external valve 50. It is, on the other hand, clear that, in another possible embodiment, the open/close element internal to the device 40 may be configured so as to assume a position of closing of the outlets 43-44 and of simultaneous opening of just the outlet 45 (as well as, obviously, positions of opening of the outlets 43 and/or 44, with simultaneous closing of the outlet 45): in such a case, then, the valve 50 is not strictly necessary.

As has been said, the operating modalities of management of the liquid-storage system (filling and emptying of the tank 30', as well as use of the liquid) are regardless of the purposes of the invention: consequently, in the practical embodiment of the invention, said operating modalities may vary from the ones exemplified previously. In this perspective, total or partial filling of the tank 30' could, for example, be carried out even with substantially clean water, in one of the initial steps of a washing cycle - for example, prior to the first step of washing using a device 40 according to the previous variant embodiment. The water thus stored in the tank 30' can - in the course of one or more subsequent hot-treatment steps of the program - be at least partially heated, thanks to the heat exchange between the tub 3 and the body 31' of the tank, in view of execution of a subsequent treatment step, at which emptying of the tank will be carried out.

Another possibility is to charge the tank with clean water in the course of the washing cycle, for example, at the end of the corresponding treatment steps, and then proceed to emptying the tank itself in the course of a subsequent washing cycle. Also in this case, the liquid discharged from the tank will be substantially at room temperature, enabling a certain energy saving for heating thereof.

In a further possible variant the machine according to the invention has a further sprinkler, substantially of the shower type, mounted at the upper wall 3b of the tub 3. In said embodiment, the device 40, with the corresponding casing and internal open/close element, will be configured so as to have, in addition to the outlets 43, 44 and 45, a further outlet connected to the supply of the aforesaid third sprinkler. Possibly, also in this variant the open/close element inside the device 40 may be configured so as to assume also a position in which the three main outlets are closed and the outlet 45 is open: hence, in such a case, the valve 50 is not strictly necessary.

## Claims

1. A dishwashing machine having a structure that comprises a base (2) and a wash tub (3) supported by the base (2), wherein the base (2) defines a housing space (2a) for housing operating components of the machine, and wherein the tub (3) has a lower wall (3a), an upper wall (3b), and stationary side walls (3c-3e), the machine (1) having an auxiliary functional system, such as a system for drying dishes or a liquid-storage system, which comprises a body (31') with a first portion (34) that is generally vertical and faces a stationary side wall (3d) of the tub (3), the body (31') defining an internal cavity and having at least one first opening (32) for setting said cavity in fluid communication with the inside of the tub (3), wherein:
- said body (31') has a second portion (35) that is generally horizontal and faces the upper wall (3b) of the tub (3), the first opening (32) of said body (31') being defined in said second portion (35), at a first face thereof facing the upper wall (3b) of the tub (3);
- the upper wall (3b) of the tub (3) has a through opening (60) to which the first opening (32) of said body (31') is operatively coupled, the second portion (35) of said body (31') being secured to the upper wall (3b) of the tub (3) in a position corresponding to said through opening (60);
**characterized in that** said body (31') belongs to a tank (30') forming part of a liquid-storage system, said first opening (32) providing a vent opening and/or an outlet of the tank (30'), in particular an overflow outlet.

2. The dishwashing machine according to Claim 1, wherein said body (31') integrates, in an end region of the first portion (34) that is generally opposite to the second portion (35), first positioning means (70, 71), which can be coupled with respective second positioning means (72, 73) of the base (2).

3. The dishwashing machine according to Claim 1 or Claim 2, wherein the first opening (32) of said body (31') is defined by a tubular stretch (62) of the second portion (35), which projects from said first face and is fitted in said through opening (60).

4. The dishwashing machine according to Claim 2, wherein the first positioning means (70, 71) comprise at least two projections (71) projecting downwards from a lower edge of the first portion (34) of said body (31'), and the second positioning means (72, 73) comprise two cantilever walls (72) of the base (2), defined in each of which is a respective seat (72a) for a corresponding projection (71).

5. The dishwashing machine according to Claim 2 or Claim 4, wherein the first positioning means (70, 71) comprise flanges (72) projecting laterally from a lower terminal part (39) of the first portion (34) of said body (31') and the second positioning means (72, 73) comprise formations (73) of the base (2), defined in each of which is a hole for fixing, via a screw (74), a corresponding flange (71).

6. The dishwashing machine according to Claims 4 and 5, wherein said lower terminal part (39) is in an intermediate position with respect to the two projections (71), and the cantilever walls (72) are spaced apart from each other, for receiving said lower terminal part (39) between them.

7. The dishwashing machine according to Claim 3, wherein said tubular stretch (62) has a thread at least in a part thereof projecting into the tub (3), and screwed thereon is a fixing member (65), preferably configured for shielding said first opening (32).

8. The dishwashing machine according to Claim 7, wherein the through opening (60) is defined at a drawn area (61) of the upper wall (3b) of the tub (3).

9. The dishwashing machine according to any one of the preceding claims, wherein said body (31') has at least one second opening (39a) for inlet of liquid into the corresponding cavity.

10. The dishwashing machine according to Claim 9, wherein said second opening (39a) is defined in a lower terminal part (39) of the first portion (34) of said body (31').

11. The dishwashing machine according to Claim 10, wherein the storage system is prearranged in such a way that said second opening (39a) functions alternatively as inlet and as outlet for the liquid with respect to said cavity, there being operatively associated valve means (40, 50) to the second opening (39a).

## Patentansprüche

1. Geschirrspülmaschine, welche eine Struktur aufweist, welche eine Basis (2) und einen von der Basis (2) getragenen Waschbehälter (3) umfasst, wobei die Basis (2) einen Gehäuseraum (2a) zum Aufnehmen von Betriebskomponenten der Maschine definiert, und wobei der Behälter (3) eine untere Wand (3a), eine obere Wand (3b) und stationäre Seitenwände (3c - 3e) aufweist, wobei die Maschine (1) ein Hilfs-Funktionssystem, wie beispielsweise ein System zum Trocknen von Geschirr oder ein Flüssigkeits-Speichersystem, welches einen Körper (31') mit einem ersten Abschnitt (34), welcher im Wesentlichen vertikal ist und zu einer stationären Seitenwand (3d) des Behälters (3) weist, umfasst, wobei der Körper (31') einen Innenhohlraum definiert und wenigstens eine erste Öffnung (32) zum in Flüssigkeitsverbindung-Bringen des Hohlraums mit dem Inneren des Behälters (3) aufweist, wobei:
- der Körper (31') einen zweiten Abschnitt (35) aufweist, welcher im Wesentlichen horizontal ist und in Richtung der oberen Wand (3b) des Behälters weist, wobei die erste Öffnung (32) des Körpers (31') in dem zweiten Abschnitt (35) an einer ersten Fläche davon definiert ist, welche in Richtung der oberen Wand (3b) des Behälters weist;
- die obere Wand (3b) des Behälters (3) eine Durchgangsöffnung (60) aufweist, mit welcher die erste Öffnung (32) des Körpers (31') betriebsmäßig gekoppelt ist, wobei der zweite Abschnitt (35) des Körpers (31') an der oberen Wand (3b) des Behälters (3) in einer Position gesichert ist, welche der Durchgangsöffnung (60) entspricht; **dadurch gekennzeichnet, dass** der Körper (31') zu einem Tank (30') gehört, welcher einen Teil eines Flüssigkeits-Speichersystems bildet, wobei die erste Öffnung (32) eine Lüftungsöffnung oder/und einen Auslass des Tanks (30'), insbesondere eine Überlaufauslass bereitstellt.

2. Geschirrspülmaschine nach Anspruch 1, wobei der Körper (31') in einem Endbereich des ersten Abschnitts (34), welcher im Wesentlichen gegenüber dem zweiten Abschnitt (35) liegt, erste Positionierungsmittel (70, 71) enthält, welche mit jeweiligen zweiten Positionierungsmitteln (72, 73) der Basis (2) gekoppelt werden können.

3. Geschirrspülmaschine nach Anspruch 1 oder Anspruch 2, wobei die erste Öffnung (32) des Körpers (31') durch einen rohrförmigen Teil (62) des zweiten Abschnitts (35) definiert ist, welcher sich von der ersten Fläche erstreckt und in die Durchgangsöffnung (60) eingepasst ist.

4. Geschirrspülmaschine nach Anspruch 2, wobei die ersten Positionierungsmittel (70, 71) wenigstens zwei Vorsprünge (71) umfassen, welche nach unten von einem unteren Rand des ersten Abschnitts (34) des Körpers (31') vorstehen, und wobei die zweiten Positionierungsmittel (72, 73) zwei Kragarm-Wände (72) der Basis (2) umfassen, wobei in jedem von diesen ein jeweiliger Sitz (72a) für einen entsprechenden Vorsprung (71) definiert ist.

5. Geschirrspülmaschine nach Anspruch 2 oder Anspruch 4, wobei die ersten Positionierungsmittel (70, 71) Flansche (72) umfassen, welche sich lateral von einem unteren Anschlussteil (39) des ersten Abschnitts (34) des Körpers (31') erstrecken, und wobei die zweiten Positionierungsmittel (72, 73) Formationen (73) der Basis (2) umfassen, wobei in jeder von diesen ein Loch zum Befestigen eines jeweiligen Flanschs (71) mittels einer Schraube (74) definiert ist.

6. Geschirrspülmaschine nach Anspruch 4 oder 5, wobei der untere Anschlussteil (39) in einer Zwischenposition bezüglich der beiden Vorsprünge (71) ist, und die Kragarm-Wände (72) voneinander beabstandet sind, um den unteren Anschlussteil (39) dazwischen aufzunehmen.

7. Geschirrspülmaschine nach Anspruch 3, wobei der rohrförmige Teil (62) ein Gewinde an wenigstens einem Teil davon aufweist, welcher sich in den Behälter (3) erstreckt und auf welchen ein Befestigungselement (65) aufgeschraubt ist, welches vorzugsweise dazu eingerichtet ist, die erste Öffnung abzuschirmen.

8. Geschirrspülmaschine nach Anspruch 7, wobei die Durchgangsöffnung (60) an einer eingezogenen Fläche (61) der oberen Wand (3b) des Behälters (3) definiert ist.

9. Geschirrspülmaschine nach einem der vorhergehenden Ansprüche, wobei der Körper (31') wenigstens eine zweite Öffnung (39a) zum Einlassen von Flüssigkeit in den entsprechenden Hohlraum aufweist.

10. Geschirrspülmaschine nach Anspruch 9, wobei die zweite Öffnung (39a) in einem unteren Anschlussteil (39) des ersten Abschnitts (34) des Körpers (31') definiert ist.

11. Geschirrspülmaschine nach Anspruch 10, wobei das Speichersystem derart im Voraus angeordnet ist, dass die zweite Öffnung (39a) alternativ als Einlass und als Auslass für die Flüssigkeit bezüglich des Hohlraums wirkt, wobei der zweiten Öffnung (39a) betriebsmäßig Ventilmittel (40, 50) zugeordnet sind

## Revendications

1. Lave-vaisselle comportant une structure qui comprend une base (2) et une cuve de lavage (3) supportée par la base (2), dans lequel la base (2) définit un espace de logement (2a) pour loger des composants fonctionnels de la machine, et dans lequel la cuve (3) comporte une paroi inférieure (3a), une paroi supérieure (3b) et des parois latérales fixes (3c-3e), la machine (1) comportant un système fonctionnel auxiliaire tel qu'un système pour sécher des plats ou un système de stockage de liquide, lequel comporte un corps (31') pourvu d'une première partie (34) qui est, de façon générale, verticale et qui fait face à une paroi latérale fixe (3d) de la cuve (3), le corps (31') définissant une cavité interne et comportant au moins une première ouverture (32) pour mettre ladite cavité en communication de fluide avec l'intérieur de la cuve (3), dans lequel :
- ledit corps (31') comporte une seconde partie (35) qui est, de façon générale, horizontale et qui fait face à la paroi supérieure (3b) de la cuve (3), la première ouverture (32) dudit corps (31') étant définie dans ladite seconde partie (35) sur une première face de celle-ci en regard de la paroi supérieure (3b) de la cuve (3) ;
- la paroi supérieure (3b) de la cuve (3) présente une ouverture traversante (60) à laquelle la première ouverture (32) dudit corps (31') est couplée fonctionnellement, la seconde partie (35) dudit corps (31') étant fixée à la paroi supérieure (3b) de la cuve (3) dans une position correspondant à ladite ouverture traversante (60) ;
**caractérisé en ce que** ledit corps (31') appartient à un réservoir (30') faisant partie d'un système de stockage de liquide, ladite première ouverture (32) fournissant une ouverture d'aération et/ou un orifice de sortie du réservoir (30'), en particulier un orifice de sortie par débordement.

2. Lave-vaisselle selon la revendication 1, dans lequel ledit corps (31') intègre, dans une zone d'extrémité de la première partie (34) qui est globalement opposée à la seconde partie (35), des premiers moyens de positionnement (70 , 71), lesquels peuvent être couplés avec des seconds moyens de positionnement respectifs (72, 73) de la base (2).

3. Lave-vaisselle selon la revendication 1 ou la revendication 2, dans lequel la première ouverture (32) dudit corps (31') est définie par une extension tubulaire (62) de la seconde partie (35), qui fait saillie à partir de ladite première face et est ajustée dans ladite ouverture traversante (60).

4. Lave-vaisselle selon la revendication 2, dans lequel les premiers moyens de positionnement (70 , 71) comportent au moins deux parties en saillie (71) faisant saillie vers le bas à partir d'un bord inférieur de la première partie (34) dudit corps (31'), et les seconds moyens de positionnement (72, 73) comportent deux parois en porte-à-faux (72) de la base (2), dans chacune desquelles se trouve définie un siège respectif (72a) pour une partie en saillie correspondante (71).

5. Lave-vaisselle selon la revendication 2 ou la revendication 4, dans lequel les premiers moyens de positionnement (70, 71) comportent des rebords (72) faisant saillie latéralement à partir d'une partie terminale inférieure (39) de la première partie (34) dudit corps (31') et les seconds moyens de positionnement (72, 73) comportent des conformations (73) de la base (2), dans chacune desquelles se trouve défini un trou permettant de fixer, par l'intermédiaire d'une vis (74), un rebord correspondant (72).

6. Lave-vaisselle selon les revendications 4 et 5, dans lequel ladite partie terminale inférieure (39) se trouve dans une position intermédiaire par rapport aux deux parties en saillie (71) et les parois en porte-à-faux (72) sont écartées l'une de l'autre, pour recevoir entre elles ladite partie terminale inférieure (39).

7. Lave-vaisselle selon la revendication 3, dans lequel ladite extension tubulaire (62) comporte un filetage au moins dans une partie de celle-ci faisant saillie dans la cuve (3), filetage sur lequel est vissé un élément de fixation (65), de préférence configuré pour protéger ladite première ouverture (32).

8. Lave-vaisselle selon la revendication 7, dans lequel l'ouverture traversante (60) est définie en une zone étirée (61) de la paroi supérieure (3b) de la cuve (3).

9. Lave-vaisselle selon l'une quelconque des revendications précédentes, dans lequel ledit corps (31') comporte au moins une seconde ouverture (39a) pour l'admission d'un liquide dans la cavité correspondante.

10. Lave-vaisselle selon la revendication 9, dans lequel ladite seconde ouverture (39a) est définie dans une partie terminale inférieure (39) de la première partie (34) dudit corps (31').

11. Lave-vaisselle selon la revendication 10, dans lequel le système de stockage est préconçu de telle sorte que ladite seconde ouverture (39a) fonctionne alternativement comme un orifice d'admission et comme un orifice de sortie pour le liquide par rapport à ladite cavité, des moyens de vanne (40, 50) étant associés fonctionnellement à la seconde ouverture (39a).
